# FASCICULE DE BREVET EUROPEEN

(11) **EP 3 588 361 B1**
(45) Date de publication et mention de la délivrance du brevet: **22.07.2020**
(21) Numéro de dépôt: 19179766.1
(22) Date de dépôt: 12.06.2019
(51) Int. Cl.: G06F 21/79, G06F 21/62, G06F 21/44

(54) **SUPPORT AMOVIBLE DE STOCKAGE DE DONNÉES**
ENTFERNBARE DATENSPEICHERVORRICHTUNG
REMOVABLE DATA STORAGE

(30) Priorité: 29.06.2018 FR 1855997
(43) Date de publication de la demande: 01.01.2020
(73) Titulaire: Electricité de France, 75008 Paris (FR)
(72) Inventeur: SENG, Sorithy, 94400 VITRY SUR SEINE (FR); MUCCHIETTO, Cyrille, 91310 LEUVILLE (FR); NGUYEN PHONG CHAU, Pierre, 92120 MONTROUGE (FR); RODIONOFF, Nathalie, 92320 CHATILLON (FR); COUDE, Jordan, 75014 PARIS (FR)
(74) Mandataire: Plasseraud IP

(56) Documents cités:
- EP-A1- 2 535 846
- US-A1- 2008 010 685

## Description

### Domaine technique

L'invention relève du domaine des supports amovibles destinés à être connectés à une pluralité de postes informatiques.

### Problème technique

Lorsque des communications via un réseau ne sont pas possibles ou pas souhaitables, il est connu d'utiliser des supports amovibles de stockage de données, typiquement une clé USB, pour échanger des données d'un poste informatique à un autre. Cependant, les données téléchargées depuis un premier poste sur le support sont généralement, ensuite, accessibles aux postes auxquels est ensuite connecté le support. Cela n'est pas souhaitable, en particulier lorsque l'intégrité de certains aux moins de ces postes est inconnue. EP 2 535 846 décrit des méthodes de partitionnement de tels supports.

### Technique antérieure

Une solution consiste à utiliser un support par poste cible, puis à centraliser les données réparties sur les différents supports sur un poste principal équipé et configuré, notamment en termes de sécurité informatique, pour télécharger les données sans corrompre ni les données elles-mêmes, ni le poste principal. Cela est peu pratique et devient fastidieux lorsque le nombre de postes est élevé. En outre, en cas de perte ou de vol d'un des supports, les données qu'il contient ne sont pas protégées.

À titre d'exemple contextuel, la demanderesse doit accéder à de nombreux postes informatiques fixes, dépourvus de connexion réseau, situés dans des environnements industriels difficiles d'accès aux humains, sur lesquels les composants matériels et logiciels ne peuvent pas être régulièrement mis à jour et sur lesquels, pour certains au moins, les paramètres de sécurité ne permettent pas d'y installer de nouveaux composants logiciels. Malgré ces contraintes, des données de contenu doivent pouvoir être fournies à ces postes et des données de contenu doivent pouvoir être extraites de ces postes. Cela est notamment le cas dans certaines zones d'installations nucléaires.

### Résumé de l'invention

L'invention vient améliorer la situation.

### Exposé de l'invention

Il est proposé un procédé informatique de gestion d'un support amovible de stockage de données mis en œuvre par un microcontrôleur embarqué ou une plateforme matérielle informatique embarquée sur le support. Le support est agencé pour être connecté physiquement et alternativement à au moins un poste administrateur et à une pluralité de postes hôtes. Le procédé comprend :
a) en l'absence de réception d'un signal d'identification du poste administrateur sur le support, et à réception d'un premier signal d'initialisation de connexion issu d'un poste, assimiler ledit poste à un poste hôte et transmettre au poste hôte des données de configuration spécifiques à un mode courant dans lequel le poste hôte accède, en lecture et en écriture, à un premier volume de stockage dédié du support et n'accède pas, ni en lecture ni en écriture, à des volumes de stockage préalablement verrouillés et/ou masqués du support ; puis
b) à réception d'un signal de déconnexion imminente du support et/ou à réception d'un second signal d'initialisation de connexion d'un poste hôte en l'absence de réception d'un signal d'identification du poste administrateur, verrouiller et/ou masquer le premier volume de stockage dédié de sorte que ledit premier volume devienne inaccessible à tout poste hôte auquel le support serait désormais connecté ;
c) déverrouiller et/ou rendre visible un deuxième volume de stockage dédié, différent du premier volume de stockage dédié, de sorte que ledit deuxième volume de stockage dédié devienne accessible à un poste hôte auquel le support serait désormais connecté.

Dans de contexte, il est possible de mettre en œuvre un procédé de configuration préalable d'un support amovible de stockage de données mis en œuvre par un poste administrateur auquel est connecté ledit support, pour une mise en œuvre ultérieure d'un procédé de gestion tel que défini ci-avant. Le procédé de configuration préalable comprend :
i) partitionner le support en générant des partitions hôtes, chaque partition hôte correspondant à un volume de stockage dédié à une future connexion du support à un poste hôte ;
ii) formater chacune des partitions hôtes ;
iii) stocker dans une zone d'administration du support des données de configuration spécifiques au mode administration incluant des données relatives au partitionnement, dont au moins les adresses mémoires des partitions générées ;
iv) verrouiller et/ou masquer ladite zone d'administration de sorte que ladite zone soit ultérieurement inaccessible en lecture et en écriture à un poste hôte auquel le support serait ultérieurement connecté ;
v)
   - générer une table de partition publique vide, ou
   - vider de son contenu une table de partition publique préexistante, ou
   - générer une table de partition publique dans laquelle une unique partition correspondant à un volume de stockage dédié est référencée comme accessible en écriture, de sorte que ledit volume de stockage dédié est dédié au prochain poste hôte auquel sera connecté le support.

Selon un autre aspect, il est proposé un procédé de centralisation de données sur un poste administrateur depuis un support amovible de stockage de données sur lequel a préalablement été mis en œuvre un procédé de gestion tel que défini ci-avant. Le procédé de centralisation comprend un processus de déclenchement du mode administration, ledit processus incluant :
1) transmettre, depuis le poste administrateur au support, un signal d'identification du poste administrateur.

Selon un autre aspect, il est proposé un support amovible de stockage de données comprenant un microcontrôleur embarqué ou une plateforme matérielle informatique embarquée agencés pour mettre en œuvre l'un au moins des procédés tel que défini dans les présentes. Selon un autre aspect, il est proposé un programme informatique comportant des instructions pour la mise en œuvre de tout ou partie de l'un des procédés tel que défini dans les présentes lorsque ce programme est exécuté par un processeur. Selon un autre aspect de l'invention, il est proposé un support d'enregistrement non transitoire, lisible par un ordinateur, sur lequel est enregistré un tel programme.

Les caractéristiques exposées dans les paragraphes suivants peuvent, optionnellement, être mises en œuvre. Elles peuvent être mises en œuvre indépendamment les unes des autres ou en combinaison les unes avec les autres :
- Dans le mode courant, le poste hôte auquel est connecté le support accède en outre, en lecture et pas en écriture, à un volume de stockage public du support. Cela permet par exemple de rendre disponible pour tous les postes hôtes des données ou logiciels sans qu'il soit nécessaire de les dupliquer sur chacun des volumes de stockage dédiés.
- Le support comprend au moins un connecteur USB par l'intermédiaire duquel le support est connecté aux postes, et dans lequel les données de configuration sont transmises selon les protocoles de communication USB et de mémoire de masse, l'accès en lecture et en écriture à un volume de stockage dédié en mode courant incluant l'accès par le poste hôte à une table de partitions publique stockée sur le support, ladite table de partition publique étant construite de sorte que les volumes de stockage préalablement verrouillés y sont référencés comme inaccessibles et/ou que les volumes de stockage préalablement masqués y sont non-référencés. Un tel procédé peut être mis en œuvre par un microcontrôleur (peu couteux) embarqué sur le support. Cela est en outre compatible avec les protocoles usuels de communication USB, notamment l'usage de table de partitions, de sorte qu'il est inutile d'installer un composant logiciel spécifique et supplémentaire sur les postes hôtes pour fonctionner.
- Le procédé de gestion comprend en outre, à réception d'une commande de lecture et/ou d'écriture depuis le poste hôte par le support, en mode courant :
   d) vérifier la validité de la commande par comparaison de l'adresse mémoire et de la taille des données à écrire incluses dans la commande avec les adresses et tailles du volume de stockage dédié, de sorte que ladite commande est permise et mise en œuvre uniquement en cas de validité, et rejetée sinon. Cela permet limiter les risques d'accès non autorisés du poste hôte à des données stockées sur le support.
- Le procédé de gestion comprend en outre :
   e) établir un canal en Accès Mémoire Direct entre un contrôleur USB du poste hôte et un contrôleur mémoire du support. Cela permet la communication directe entre le contrôleur USB et le contrôleur mémoire, évitant ainsi de monopoliser les ressources du support tel que le microcontrôleur. La communication est donc accélérée.
- Dans le procédé de gestion,
   en l'absence de réception d'un signal d'identification du poste administrateur sur e support, à réception d'un premier signal d'initialisation de connexion issu d'un poste et préalablement à la transmission au poste hôte des données de configuration spécifiques au mode courant,
   la série d'étapes suivantes est mise en œuvre :
   a0) créer un fichier creux d'une taille préétablie ;
   a1) convertir le fichier creux en un volume de stockage virtuel ;
   a2) formater le volume de stockage virtuel selon un système de fichiers préétabli, et dans lequel le volume de stockage dédié dont l'accès en lecture et en écriture est permis au poste hôte via les descripteurs selon le protocole USB, est ledit volume de stockage virtuel,
      de sorte que le poste hôte lit et/ou écrit sur le volume de stockage virtuel seulement indirectement par l'intermédiaire de la plateforme matérielle informatique embarquée sur le support alors même que le volume de stockage virtuel est reconnu par le poste hôte comme un volume de stockage physique selon les protocoles USB. Une telle plateforme présente des performances informatiques élevée, notamment par rapport à un microcontrôleur, qui permettent d'être indépendant des ressources informatiques du poste hôte. Cela facilite notamment les reconfigurations dynamiques du support.
- Le procédé de gestion comprend en outre :
   a') à réception d'un signal d'identification du poste administrateur sur le support, transmettre audit poste administrateur des données de configuration spécifiques à un mode administration dans lequel le poste administrateur accède, en lecture et en écriture, à l'ensemble des données de contenu et de configuration stockées sur le support.
- Dans le procédé de gestion, la transmission de données de configuration spécifiques au mode administration inclut au préalable la mise en œuvre d'une authentification mutuelle entre le support et le poste auquel il est connecté par défi-réponse cryptographique. Le support limite l'accès à l'ensemble des données au poste administrateur, ce qui limite les risques d'accès non autorisé aux données stockées sur le support.
- Dans le procédé de gestion, la transmission de données de configuration spécifiques au mode administration inclut un processus de déclenchement du mode administration, ledit processus incluant :
- détecter l'inscription par un poste sur le support d'un fichier nommé de manière prédéfinie et contenant un horodatage ;
- vérifier que ledit fichier respecte des critères de sécurité préétablis ; et
- activer le mode administration en donnant accès au poste administrateur à l'ensemble des données de contenu et de configuration stockées sur le support si et seulement si le résultat de la vérification est positif. Le comportement du support reste neutre tant que le fichier n'est pas reconnu. L'accès au mode administration est déclenché à l'initiative du poste d'administration. Par conséquent, l'existence même du mode administration est difficilement détectable par rapport à un support de données usuel.
- Le processus de déclenchement du mode administration inclut en outre la mise en œuvre d'une authentification mutuelle entre le support et le poste auquel il est connecté par défi-réponse cryptographique. Cela permet de limiter les risques de déclenchement de mode administration non autorisé.
- Le signal d'identification du poste administrateur prend la forme d'un fichier nommé de manière prédéfinie contenant un horodatage. Cela permet de limiter les risques de déclenchement de mode administration non autorisé.

### Avantages apportés

L'invention et les variantes de celle-ci peuvent permettre, de manière générale, de proposer un support amovible de stockage de données, par exemple de type clé USB (pour « *Universal Serial Bus* »), sur lequel les accès aux données sont adaptés dynamiquement et de manière autonome. Ainsi, à chaque connexion du support sur un nouveau poste informatique, un nouvel espace de stockage, vierge ou non, est accessible au poste. Les données préalablement téléchargées sur le support depuis les postes précédents sont inaccessibles au nouveau poste. Autrement dit, les données sont cloisonnées sur le support en fonction des postes desquels elles proviennent ou auxquels elles sont destinées. Les risques de compromission des données stockées et des postes auxquels est connecté le support sont réduits. Par compromission, on entend à la fois leur altération et leur accès non autorisé.

### Brève description des dessins

D'autres caractéristiques, détails et avantages de l'invention apparaîtront à la lecture de la description détaillée ci-après, et à l'analyse des dessins annexés, sur lesquels :
**Fig.1**
   [Fig.1] montre une utilisation prévue d'un mode de réalisation de l'invention ;
**Fig.2**
   [Fig.2] montre une structure du support selon un mode de réalisation de l'invention tel qu'il est perçu depuis un poste administrateur ;
**Fig.3**
   [Fig.3] montre des interactions entre un poste administrateur et un support selon un mode de réalisation de l'invention ;
**Fig.4**
   [Fig.4] montre une structure du support selon un mode de réalisation de l'invention tel qu'il est perçu depuis un poste quelconque ;
**Fig.5**
   [Fig.5] montre une organisation d'un ensemble de procédés selon l'invention.

### Description des modes de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Il est maintenant fait référence à la figure 1. Dans un exemple de mise en œuvre, un système informatique se compose d'un support 1 amovible de stockage de données et d'une pluralité de postes 100, 201, 202, 203 informatiques (ou machines), par exemple fixes. Chaque poste comprend au moins un processeur et un organe de stockage de données, par exemple de technologie connue en tant que telle. Parmi les postes, on distingue au moins un poste administrateur 100, les postes restants étant appelés postes hôtes 201, 202, 203. Les postes hôtes 201, 202, 203 sont dépourvus de connexion réseau, ou du moins, les connexions réseaux sont inutilisées dans la suite. Ainsi, seul une connexion temporaire au support 1 va permettre d'échanger des données entre un poste hôte et l'extérieur. Dans l'exemple de la figure 1, un unique poste administrateur 100 et trois postes hôtes 201, 202, 203 sont prévus. En variante, le système comprend un nombre différent de postes administrateurs et/ou de postes hôtes.

Dans les exemples, le support 1 prend la forme d'une clé (ou « *dongle* ») USB : le support 1 comprend au moins un connecteur USB, ici mâle, par l'intermédiaire duquel le support 1 peut être physiquement et alternativement connecté à chacun des postes 100, 201, 202, 203 via au moins un connecteur USB respectif, ici femelle, des postes 100, 201, 202, 203. Des données de configuration sont transmises du support 1 au poste 100, 201, 202, 203 auquel il est connecté via des bus USB. Les données de configuration respectent les protocoles de communication USB, et par exemple de définition de mémoire de masse (ou « *Mass-Storage* »), et permettent au poste 100, 201, 202, 203 d'identifier le support 1 comme un support de stockage amovible de données. Les données de configurations peuvent par exemple être transmises sous la forme de « descripteurs » selon le protocole USB. L'usage des normes USB, et optionnellement le profil de mémoire de masse, permet de rendre compatible le support 1 avec un grand nombre de postes existants car les connecteurs USB et les normes associées sont communs et répandus. Ainsi, un tel support, de type USB, est compatible avec de tels postes sans qu'il soit nécessaire d'y installer de nouveaux composants logiciels. Or, dans certains contextes d'utilisation et comme expliqué ci-avant, se dispenser d'installer de nouveaux composants logiciels sur les postes informatiques hôtes est une contrainte importante. En variante, le support 1 peut comprendre, en complément ou en remplacement de l'USB, d'autres types de connecteurs aptes à permettre une connexion avec un parc de postes informatiques.

En termes matériel, le support 1 peut être similaire aux clés USB usuelles et comprendre, par exemple, un microcontrôleur embarqué. Dans des modes de réalisation, le support 1 peut comprendre, en plus du microcontrôleur embarqué ou en remplacement de celui-ci, une plateforme matérielle informatique embarquée. Par plateforme matérielle informatique embarquée, on entend, par exemple, un système embarqué sur une puce (ou SoC pour « *System on a Chip* ») disposant d'une capacité de traitement supérieure à celle des microcontrôleurs. Le microcontrôleur embarqué et/ou la plateforme matérielle informatique embarquée forment un ensemble de composants matériels et logiciels propres à coopérer de sorte que le support 1 dispose de ses propres ressources informatiques, indépendantes de celles du poste auquel le support 1 est connecté. Ainsi, le support 1 peut effectuer des opérations informatiques de manière autonome, tant qu'il est alimenté en énergie, soit via le poste auquel il est connecté, soit via une batterie (optionnelle) du support 1. Dans le cas d'une plateforme matérielle informatique embarquée, le support 1 se comporte alors lui-même comme un mini-ordinateur et peut disposer de son propre système d'exploitation. Les modes de réalisation incluant une plateforme matérielle informatique embarquée permettent généralement de disposer de mécanismes de développement plus importants qu'un support 1 comprenant seulement un microcontrôleur. Un support comprenant un microcontrôleur embarqué mais dépourvu de plateforme matérielle informatique embarquée est généralement moins coûteux et peut être réalisé à base d'un support existant.

Dans le fonctionnement prévu du support 1, le support 1 est connecté physiquement et alternativement au poste administrateur 100 et à chacun des postes hôtes 201, 202, 203. Par exemple, un opérateur connecte d'abord le support 1 au poste administrateur 100, puis à chacun des postes hôtes 201, 202, 203, puis à nouveau au poste administrateur 100. Un tel cycle de connexions/déconnexions peut être répété autant de fois que souhaité.

Le fonctionnement au cours du cycle précité peut être décomposé en trois phases :
- une phase de configuration préalable, lorsque le support 1 est connecté au poste administrateur 100 avant d'être connecté à des postes hôtes 201, 202, 203. Le support 1 et le poste administrateur 100 coopèrent en mettant chacun en œuvre un procédé de configuration 21 préalable ;
- une phase de gestion du support 1, chaque fois que le support 1 est connecté à un poste hôte, le support 1, ou du moins le microcontrôleur embarqué ou la plateforme matérielle informatique embarquée, met en œuvre un procédé de gestion 22 du support 1. Au cours des phases de gestion, les postes hôtes 201, 202, 203 peuvent quant à eux présenter un fonctionnement usuel ;
- une phase de centralisation de données, lorsque le support 1 est connecté à un poste administrateur 100, après avoir été connecté à des postes hôtes 201, 202, 203, le support 1 et le poste administrateur 100 mettent chacun en œuvre un procédé de centralisation 23 de données.

Les trois phases peuvent être mises en œuvre les unes à la suite des autres dans l'ordre ci-avant. À l'issue d'une phase de centralisation de données, une nouvelle phase de configuration préalable peut être mise en œuvre pour recommencer le cycle, sans qu'il soit nécessaire de déconnecter puis reconnecter le support 1 du poste administrateur 100. Chacune des trois phases et des procédés qui les composent peuvent être considérés indépendamment les uns des autres, notamment parce qu'ils sont mis en œuvre par des entités différentes et parce qu'ils peuvent être espacés les uns des autres de longues durées : le support 1 peut rester débranché et passif longtemps entre deux phases. Pour autant, et malgré leurs différences, les trois phases participent à l'objectif technique général d'améliorer les échanges de données entre plusieurs postes sous les contraintes définies en introduction. Autrement dit, chacun des procédés de chacune des phases considérés individuellement peut être vu comme une invention en tant que telle. Il est donc justifié d'obtenir une protection pour chacun d'eux. Pour autant, ces inventions sont liées entre elles de telle sorte qu'elles ne forment qu'un seul concept inventif général. Il est donc légitime de les regrouper au sein de la présente demande.

Dans la suite, on distingue un mode administration (ou mode « *Masser* ») et un mode courant. Au cours du mode administration, le poste administrateur 100 auquel est connecté le support 1 a accès à l'ensemble des données de contenu et de configuration stockées sur le support 1, par exemple en « montant » chaque volume du support 1 sur le poste administrateur 100. En variante, notamment lorsque le support 1 dispose d'une plateforme matérielle informatique embarquée et que l'on souhaite contourner d'éventuelles limites de nombres de partitions pour certains systèmes d'exploitation usuels, le support 1 peut être déclaré auprès du poste administrateur 100 en tant que périphérique de stockage en réseau (ou NAS pour « *Network Attach Storage* »). Le système de fichiers SSHFS (pour « *Secure SHell File System* ») peut par exemple être utilisé dans ce cas. Ainsi, chaque volume est accessible indépendamment des gestionnaires de fichiers utilisés. Au cours du mode courant, le poste hôte 201, 202, 203 auquel est connecté le support 1 a un accès limité au contenu du support 1.

Il est maintenant fait référence à la figure 2, montrant un mode de réalisation d'une phase de configuration. Le poste administrateur 100 auquel est connecté le support 1 met en œuvre un procédé de configuration 21 du support 1. En particulier, au moins un processeur du poste administrateur 100 est configuré pour mettre en œuvre le procédé de configuration 21, au moyen notamment de composants logiciels dédiés. Le procédé est prévu pour une mise en œuvre ultérieure d'un procédé de gestion 22. En figure 2, une zone de stockage des données est représentée décomposée en plusieurs volumes de stockage 300, 301, 302, 303. Pour la suite, on notera que la référence 300 vise un volume de stockage particulier, appelé zone d'administration 300, tandis que les références 301, 302, 303 visent des volumes de stockage « dédiés ».

Le procédé de configuration 21 préalable comprend les étapes suivantes :
i) partitionner 1001 le support 1 en générant des partitions hôtes, chaque partition hôte correspondant à un volume de stockage 301, 302, 303 dédié à une future connexion du support 1 à un poste hôte 201, 202, 203 ;
ii) formater 1002 chacune des partitions hôtes ;
iii) stocker 1003 dans une zone d'administration 300 du support 1 des données de configuration spécifiques à un mode administration incluant des données relatives au partitionnement, dont au moins les adresses mémoires des partitions générées ;
iv) verrouiller et/ou masquer 1004 ladite zone d'administration 300 de sorte que ladite zone 300 soit ultérieurement inaccessible en lecture et en écriture à un poste hôte 201, 202, 203 auquel le support 1 serait ultérieurement connecté ;
v)
   - générer 1005 une table de partition publique 2 vide, ou
   - vider de son contenu une table de partition publique 2 préexistante, ou
   - générer une table de partition publique 2 dans laquelle une unique partition correspondant à un volume de stockage dédié 301 est référencée comme accessible en écriture, de sorte que ledit volume de stockage dédié 301 est dédié au prochain poste hôte, 201 dans l'exemple, auquel sera connecté le support 1. À l'issu de ces étapes, la table de partition publique 2 est accessible mais son contenu ne correspond pas au partitionnement réel. En pratique, une partition publique 2 vide peut être obtenue, par exemple, en remplaçant les adresses mémoire de chaque partition par un pointeur vide (« NULL »).

Dans les modes de réalisation pour lesquels le support 1 comprend un microcontrôleur embarqué mais est dépourvu de plateforme matérielle informatique embarquée, l'étape i de partitionnement 1001 peut être mise en œuvre de manière connue en soit. Le nombre et la taille de chacune des partitions à créer sont imposés par le poste administrateur 100. Ils peuvent être fixes ou paramétrables par un utilisateur à partir du poste administrateur 100 en fonction du nombre de postes hôtes et des quantités de données prévus. Dans l'exemple représenté en figure 2, trois partitions 301, 302, 303 sont prévues, correspondant respectivement aux postes hôtes 201, 202 et 203. Les tailles des partitions sont inégales les unes par rapport aux autres et adaptées en fonction de quantités des données différentes à obtenir sur chacun des postes hôtes 201, 202, 203. En variante, les tailles peuvent être identiques.

L'étape ii de formatage 1002 de chacune des partitions inclut un formatage des systèmes de fichiers, soit par défaut, soit adapté à chaque poste 201, 202, 203, typiquement NTFS, FAT ou FAT32. Le formatage 1002 inclut aussi, si nécessaire, un nommage de chaque partition.

Les données relatives au partitionnement stockées dans la zone d'administration 300 au cours de l'étape iii de stockage 1003 peuvent prendre la forme d'une table de partition ayant la particularité d'être inaccessible et/ou masquée, ensuite, aux postes hôtes 201, 202, 203. Autrement dit, la table de partitions authentique est dissimulée dans une zone cachée du support 1. Une personne du métier comprendra que les étapes iii, iv et v peuvent être combinées en une unique étape à l'issue de laquelle la table de partition authentique (dont le contenu correspond au partitionnement réel) est masquée. De même, l'ordre des étapes peut, en variante, être différent de celui de leur présentation ci-avant. La zone d'administration 300 peut ressembler dans sa forme à la « zone amorce » (ou MBR pour « *Master Boot Record* ») usuelle des supports de stockage en ce qu'elle contient des données de configuration. Elle s'en distingue cependant en ce qu'elle est masquée aux postes hôtes.

Le procédé de configuration 21 préalable du support 1 décrit ici est mis en œuvre par le poste administrateur 100, notamment lorsque le support 1 est dépourvu de plateforme matérielle informatique embarquée. Un tel procédé n'est pas absolument nécessaire pour utiliser le support 1 en mode courant (connexions aux postes hôtes), notamment lorsque le support 1 comprend une plateforme matérielle informatique embarquée. Dans ce derniers cas, la configuration du support 1 peut être mise en œuvre par la plateforme elle-même, y compris à la volée lorsque le support 1 n'est pas connecté au poste administrateur 100. Cela sera décrit plus loin.

Dans des modes de réalisation, le procédé de configuration 21 préalable comprend une étape optionnelle supplémentaire : la création d'un volume de stockage public 3 référencé dans la partition publique 2, par exemple via une partition correspondante. Un tel volume de stockage public 3, contrairement aux volumes de stockage dédiés 301, 302, 303, n'a pas vocation à être visible ou accessible à un unique poste hôte 201, 202, 203 mais au contraire à être accessible, en lecture, à tous les postes auxquels sera connecté le support 1. Le volume de stockage public 3 peut être utilisé pour stocker et mettre à disposition des données de contenu et/ou logicielles. En restant inaccessible en écriture, les données du volume de stockage public 3 peuvent être considérées comme inaltérables. Les données restent donc intègres. Prévoir une zone publique sur laquelle sont stockées des données communes permet d'éviter de stocker des copies d'un même jeu de données sur chacun des volumes de stockage dédiés 301, 302, 303 et donc d'occuper inutilement de l'espace de stockage.

Dans des modes de réalisation, le procédé de configuration 21 préalable comprend une étape optionnelle supplémentaire : limiter l'accès à certains au moins des volumes de stockage 3, 300, 301, 302, 303, par des paramètres de sécurité. Par exemple, des clés cryptographiques (ou paires de clés asymétriques) peuvent être associées à certains au moins des volumes de stockage 3, 300, 301, 302, 303, lesdites clés formant un moyen d'authentification des postes et/ou des utilisateurs des postes conditionnant l'accès aux données. Par paire de clés asymétriques, on désigne ici une clé dite « publique » et une clé correspondante dite « privée ». Les deux clés asymétriques d'une paire de clés cryptographiques sont dans ce cas chargées dans la zone d'administration 300 du support 1 (inaccessible par défaut aux postes hôtes), respectivement dans une zone inaccessible des postes hôtes correspondants. Deux paires de telles clés cryptographiques asymétriques peuvent être utilisées ultérieurement pour permettre une reconnaissance mutuelle du support 1 et du poste administrateur 100, et déclencher le mode administration (par exemple lors de la phase de centralisation de données en fin de cycle). Cela permet de limiter les risques qu'un poste soit, par erreur ou acte malveillant, considéré comme un poste administrateur, et que l'accès à l'ensemble des données soit permis à un poste tiers.

Dans les modes de réalisation avec microcontrôleur, le support 1 et le poste administrateur 100 peuvent, par exemple, partager une clé cryptographique symétrique (par exemple une clé AES de 256 bits). Cette clé est connue seulement du support 1 et du poste administrateur 100. Dans les modes de réalisation avec plateforme matérielle informatique embarquée, une infrastructure de gestion de clés (ou PKI pour « *Public Key Infrastructure* ») peut être déployée pour la gestion du poste administrateur 100 et d'un ou plusieurs supports 1. Chaque support 1 et chaque poste administrateur 100 dispose d'un membre de chacune des paires de clés cryptographiques asymétriques qui lui est propre (par exemple RSA 4096 bits) ainsi que de leurs certificats.

Dans des modes de réalisation, chaque volume de stockage est laissé vierge après formatage, notamment lorsque le support 1 est utilisé uniquement pour collecter des données depuis les postes hôtes et non pour leur fournir des données. Dans des variantes, des données sont chargées sur certains au moins des volumes de stockage 301, 302, 303 à destination des postes hôtes 201, 202, 203 correspondants. Par exemple, des données de mises à jour logicielles peuvent être pré-chargées sur le support 1.

Afin que l'accès à l'ensemble des données soit bien adapté en fonction du poste auquel est connecté le support 1 (limité au poste administrateur 100), le mode administration (par opposition au mode courant) doit être activé seulement lorsque le support 1 est connecté au poste administrateur 100. À cet effet, le poste administrateur 100 est agencé pour transmettre un signal d'identification à destination du support 1, par exemple lorsqu'une connexion du support 1 est détectée.

À réception du signal d'identification, le support 1 est, par exemple, agencé pour transmettre au poste administrateur 100 des données de configuration spécifiques au mode administration, par exemple les données stockées dans la zone d'administration 300. Ainsi, en mode administration, le poste administrateur accède, en lecture et en écriture, à l'ensemble des données de contenu et de configurations stockées sur le support 1. Le passage en mode administration conditionne l'initialisation de la phase de centralisation des données sur le poste administrateur 100.

Il est maintenant fait référence à la figure 3, illustrant un processus de déclenchement du mode administration 24 sous la forme d'un exemple d'interaction entre le support 1 et le poste administrateur 100. Une telle interaction est agencée pour réaliser une authentification mutuelle. Elle peut prendre la forme de signatures cryptographiques ou de défis-réponses cryptographiques (aussi connu sous la désignation anglo-saxonne « *challenge*/*response* »). Une telle interaction peut, par exemple, se décomposer de la manière suivante :
1) le poste administrateur 100 transmet 11 au support 1 un signal d'identification du poste administrateur 100. Le signal d'identification inclut, par exemple, un nombre NP sélectionné de manière pseudo-aléatoire et des données d'identification du poste administrateur 100.
   - en réponse, le support 1 calcule un condensat cryptographique CS à partir de la concaténation du nombre NP et d'une clé cryptographique K (ladite clé K étant ici une clé symétrique préalablement partagée entre le support 1 et le poste administrateur 100), puis le support 1 transmet 12 au poste administrateur 100 le condensat CS et un nombre NS sélectionné de manière pseudo-aléatoire et différent de NP ;
2) le poste administrateur 100 reçoit 12 du support 1 le condensat CS et le nombre NS ;
3) le poste administrateur 100 calcule à son tour un condensat CS2 à partir de la concaténation du nombre NP et de la clé cryptographique K, puis le poste administrateur 100 compare les condensats CS et CS2, puis en cas d'inégalité, le processus 24 s'arrête (échec de l'authentification). En cas d'inégalité, l'authenticité du support 1 est vérifiée et le processus se poursuit. Le poste administrateur 100 calcule un condensat cryptographique CP à partir de la concaténation du nombre NS et de la clé K. Il envoie 13 au support 1 le condensat cryptographique CP ;
   - le support 1 reçoit 13 du poste administrateur 100, en retour, le condensat cryptographique CP ;
   - le support 1 calcule à son tour le condensat CP2 à partir de la concaténation du nombre NS et de la clé K. Le support 1 compare 14 alors CP2 et CP. En cas d'inégalité, le processus 24 s'arrête (échec de l'authentification). En cas d'égalité, l'authenticité du poste administrateur 100 est vérifiée ;
   - le support 1 active 15 le mode administration en donnant accès au poste administrateur 100 à l'ensemble des données de contenu et de configuration stockées sur le support 1 si et seulement si la comparaison 14 aboutit à une vérification de l'authenticité.

Certains au moins des éléments échangés dans l'exemple d'interaction ci-avant peuvent être chiffrés, par exemple au moyen de clés cryptographiques préalablement partagées par le support 1 et le poste administrateur 100 telles que celles mentionnées dans le contexte du procédé de configuration 21 préalable.

L'interaction et ses variantes décrites en référence à la figure 3 correspondent à des modes de réalisation du processus de déclenchement du mode administration 24. Elles peuvent être mises en œuvre de cette manière notamment dans les cas où le support 1 comprend un microcontrôleur et est dépourvu de plateforme matérielle informatique embarquée. D'autres processus d'authentification mutuelle peuvent aussi être mis en œuvre.

D'autres modes de réalisation du processus de déclenchement du mode administration 24 peuvent être mis en œuvre, notamment dans les cas où le support 1 comprend une plateforme matérielle informatique embarquée. Par exemple, le poste administrateur 100 se comporte initialement comme un poste hôte 201, 202, 203 et charge des données sur un volume de stockage quelconque du support 1. Néanmoins, au lieu de charger des données de contenu quelconques telles qu'attendu par le support 1, le poste administrateur 100 charge un fichier spécifique formant signal d'identification (ou certificat) de poste administrateur 100 apte à être reconnu comme tel par le support 1. Le certificat de poste administrateur 100 prend, par exemple, la forme d'un fichier nommé de manière prédéfinie et contenant un horodatage. Le fichier est signé par cryptographie par le poste administrateur 100, puis chiffré pour le support 1. Une fois le fichier chargé sur le support 1, le support 1 met en œuvre le processus suivant :
- détecter l'inscription par un poste (ici le poste administrateur 100 non encore identifié comme tel) sur le support 1 d'un fichier nommé de manière prédéfinie ;
- vérifier que le fichier respecte des critères de sécurité préétablis ; et
- activer le mode administration en donnant accès au poste administrateur 100 à l'ensemble des données de contenu et de configuration stockées sur le support 1 si et seulement si le résultat de la vérification est positif. Les critères de sécurité préétablis peuvent par exemple être les suivants :
- le fichier est correctement déchiffré par le support 1 ;
- la signature du fichier est valide et reconnue comme appartenant bien au poste administrateur 100 ;
- l'horodatage contenu dans le fichier est postérieure à l'heure courante du support 1. Cette horodatage constitue ainsi un mécanisme anti-rejeu et permet, en outre, de synchroniser l'horloge interne du support 1 (en l'absence d'une batterie permettant de maintenir une horloge).

Les critères de sécurité peuvent prendre une grande variété de formes qui ne seront pas décrits en détail ici, un technicien du domaine pouvant aisément les adapter en fonction des besoins et du niveau de sécurité souhaité, notamment en utilisant des techniques d'authentification entre matériels informatiques connues en tant que telles.

L'horodatage est optionnel. Dans les modes de réalisation pour lesquels le support 1 est dépourvu de batterie (optionnelle), la fiabilité de l'horloge est imparfaite et donc l'horodatage de fichier peut également manquer de fiabilité. Cependant, même avec une faible fiabilité en termes absolus, l'horodatage peut être fiable en termes relatifs. Autrement dit, l'ordonnancement chronologique des évènements les uns par rapport aux autres reste fiable. Or, une attaque par rejeu consiste, pour un attaquant, à « rejouer » une phase d'authentification ayant déjà réussi. Pour se protéger de ce type d'attaque, il convient de s'assurer qu'il y ait au moins un élément inédit (nouveau) à chaque phase d'authentification. À cet effet, deux types de solutions éventuellement combinées sont efficaces : un compteur ou un horodatage. Un horodatage (même imparfait dans l'absolu) mis en œuvre par l'un et l'autre des deux équipements (le support 1 et le poste administrateur 100), peut alors suffire à vérifier que l'horodatage est chronologiquement postérieur au précédent utilisé. En variante ou en complément, la transmission d'un nombre aléatoire (ou deux pour une authentification mutuelle), tel que décrit ci-avant, peut aussi constituer un élément inédit de la phase d'authentification courante. Dans ce cas, il convient de vérifier, lors d'une phase d'authentification, que l'état du compteur courant est supérieur à celui précédemment utilisé.

Le processus d'authentification décrit ci-avant est mis en œuvre par un unique message : le poste administrateur 100 envoi un unique fichier spécifique au support 1. Cet unique échange permet au support 1 d'authentifier le poste administrateur 100. Le poste administrateur 100 n'authentifie pas le support 1. Cependant, les données (l'horodatage) sont « scellées » de sorte que seul le support 1 peut y accéder. L'authentification du support 1 par le poste administrateur 100 peut être assurée dans une seconde phase, après la bascule en mode administration du support 1, notamment grâce au système de fichiers SSHFS. Les mécanismes de fonctionnement usuels sont contournés pour lire le volume et identifier l'inscription du fichier spécifique au formalisme prédéfini.

Le processus de déclenchement du mode administration 24, ou de manière générale l'authentification mutuelle du support 1 et du poste administrateur 100, peuvent être mis en œuvre chaque fois que le procédé de centralisation 23 des données et/ou le procédé de configuration 21 doit être mis en œuvre, typiquement à chaque connexion du support 1 sur le poste administrateur 100 en fin de cycle. Cela est par exemple représenté en figure 5. Chaque processus de déclenchement du mode administration 24 peut être vu comme une partie du procédé de configuration 21 et/ou du procédé de centralisation 23 ou bien être vu en soit comme un procédé à part entière.

Il est maintenant fait référence à la figure 4 représentant une phase de gestion du support 1, lorsque le support 1 est connecté à un poste hôte (le poste hôte 202 sur la figure 4). Le support 1, ou du moins le microcontrôleur embarqué ou la plateforme matérielle informatique embarquée, met en œuvre un procédé de gestion du support 1.

Le procédé de gestion 22 du support 1 comprend :
a) en l'absence de réception d'un signal d'identification du poste administrateur 100 sur le support 1, et à réception d'un premier signal d'initialisation de connexion issu d'un poste 100, 201, 202, 203, assimiler ledit poste 100, 201, 202, 203 à un poste hôte et transmettre 101 au poste hôte (le poste hôte 202 dans l'exemple de la figure 4) des données de configuration spécifiques à un mode courant.

En mode courant, le poste hôte 202 auquel est connecté le support 1 accède, en lecture et en écriture, à un premier volume de stockage dédié 302 du support 1. Le poste hôte 202 n'accède pas, ni en lecture ni en écriture, à des volumes de stockage 300, 301, 303 préalablement verrouillés et/ou masqués du support 1. En variante, l'accès au volume de stockage dédié 302 du support 1 pourrait être limité à la lecture uniquement ou à l'écriture uniquement. Ces limites pourraient aussi être adaptées à volonté pour chaque volume de stockage dédié.

Le procédé de gestion 22 comprend en outre :
b) à réception d'un signal de déconnexion imminente du support 1 et/ou à réception d'un second signal d'initialisation de connexion d'un poste hôte en l'absence de réception d'un signal d'identification du poste administrateur (100), verrouiller et/ou masquer 102 le premier volume de stockage dédié (le volume de stockage dédié 302 dans l'exemple de la figure 4) de sorte que ledit premier volume de stockage dédié devienne inaccessible à tout poste hôte auquel le support 1 serait désormais connecté ;
c) déverrouiller et/ou rendre visible 103 un deuxième volume de stockage dédié 303, différent du premier volume de stockage dédié 302, de sorte que ledit deuxième volume de stockage dédié 303 devienne accessible à un post hôte 203 auquel le support 1 serait désormais connecté.

Dans les exemples décrits ici, le support 1 est du type USB. Les données de configuration transmises entre le support 1 et chacun des postes 100, 201, 202, 203 respectent les protocoles de communication USB, et la définition des mémoires de masse. Le premier signal standard d'initialisation de connexion issu d'un poste 100, 201, 202, 203 et transmis au support 1 correspond donc au signal d'initialisation du protocole USB et déclenchant la phase d'énumération du protocole USB. Dans l'exemple décrit ici, la reconnaissance du poste en tant que poste hôte se fait par défaut, en l'absence de signal d'identification du poste administrateur 100. Les données de configuration spécifiques au mode courant et transmis du support 1 au poste hôte 202 correspond, selon le protocole USB/mémoire de masse, à l'énumération et à la transmission d'une liste de caractéristiques définissant le support 1 auprès du poste hôte 202. À ce stade, le support 1 est donc perçu par le poste hôte 202 comme un support de stockage USB usuel.

La liste de caractéristiques définissant le support 1 auprès du poste hôte 202 est sélectionnée de sorte que les volumes de stockage 300, 301, 303 préalablement verrouillés et/ou masqués du support 1 sont respectivement référencés comme inaccessibles (verrouillés) et/ou ne sont pas référencés (masqués). Ainsi, du point de vue du poste hôte 202, les volumes de stockage 300, 301, 303 n'existent pas.

L'exemple représenté en figure 4 est choisi pour représenter une situation intermédiaire du cycle représenté en figure 1 : le support 1 a préalablement été configuré sur le poste administrateur 100 et le poste hôte 201 a préalablement accédé au volume de stockage dédié 301. Le volume de stockage 301 a donc préalablement été verrouillé et/ou masqué et le premier volume de stockage 302 a préalablement été déverrouillé et/ou rendu visible.

À l'issu de l'étape a dans la situation représentée en figure 4, le poste hôte 202 peut donc interagir, en lecture et en écriture, avec le premier volume de stockage dédié 302. Dans l'exemple représenté, le support 1 comprend en outre le volume de stockage public 3, ce qui est une caractéristique optionnelle. Le volume de stockage public 3 est accessible en lecture mais verrouillé en écriture. Autrement dit, le premier volume de stockage dédié 302, et ici le volume de stockage public 3, sont pilotés par le poste hôte 202 comme si ces volumes constituaient l'ensemble du volume de stockage d'un support amovible de stockage de données usuel.

Les étapes b et c peuvent être mises en œuvre dans un ordre quelconque ou simultanément l'une par rapport à l'autre. Les étapes b et c préparent une nouvelle connexion du support 1 à un poste hôte 201, 202, 203 en faisant évoluer le volume de stockage disponible de l'un à l'autre, du premier 302 au deuxième 303 dans l'exemple. Ainsi, l'étape b permet de verrouiller ou de rendre invisibles pour le prochain poste hôte les données chargées depuis le poste hôte 202 sur le volume de stockage dédié 302. Dans l'exemple, il est prévu que le prochain poste hôte auquel sera connecté le support 1 est le poste hôte 203. Néanmoins, le fonctionnement serait similaire quel que soit le poste hôte suivant. Notamment, si le support 1 est débranché du poste hôte 202 puis rebranché au même poste hôte 202, alors le volume de stockage dédié présenté sera le volume de stockage dédié suivant 303. Pour que les étapes b et c soient mises en œuvre par le support 1, ce dernier doit être alimenté au moins en énergie via un poste auquel il est connecté (en l'absence de batterie). Le déclenchement, généralement par l'utilisateur, d'une action logicielle préalable à un débranchement du support 1 peut servir de déclenchement des étapes b et c. Ainsi, les étapes b et c sont mises en œuvre avant même que le support 1 soit débranché du poste hôte 202. Notamment en cas de déconnexion physique impromptue du support 1, les étapes b et c ne peuvent être mises en œuvre avant le branchement physique du support 1 sur un autre poste, par exemple le poste hôte 203. Dans ce cas, les étapes b et c sont mises en œuvre avant que l'étape a du cycle suivant ne soit mise en œuvre.

La mise en œuvre de l'étape c implique qu'il existe sur le support 1 un volume de stockage dédié suivant. Si tel n'est pas le cas, par exemple en fin de cycle lorsque tous les espaces de stockage dédiés prévus ont été utilisés, puis verrouillés et/ou masqués, l'étape c n'est pas mise en œuvre. Ainsi, un poste hôte auquel serait connecté le support 1 pourrait accéder seulement au volume de stockage public 3 s'il existe et seulement en lecture. Le support 1 doit être de nouveau configuré par l'intermédiaire d'un poste administrateur 100 avant de pouvoir à nouveau être utilisé en mode courant par des postes hôtes. Optionnellement, un fichier spécifique indiquant une fin de cycle peut être inscrit dans le volume de stockage public 3, en plus ou à la place des données déjà présentes.

La mise en œuvre du procédé de gestion 22 décrit ci-avant (étapes a, b et c) peut prendre différentes formes. Dans l'exemple de l'USB, l'accès en mode courant en lecture et en écriture à un volume de stockage dédié, par exemple le premier 302, inclut l'accès par le poste hôte 202 à une table de partitions publique 2 stockée sur le support 1. La table de partition publique 2 est construite de sorte que les volumes de stockage préalablement verrouillés y sont référencés comme inaccessibles et/ou que les volumes de stockage préalablement masqués y sont non-référencés (les volumes 301 et 303 dans l'exemple). De même, chaque volume de stockage dédié est associé à un indicateur d'état (par exemple booléen). Chaque fois qu'un volume de stockage dédié est accédé par un poste hôte, sont état passe de « disponible » à « utilisé », de sorte que chaque volume de stockage peut être accédé une seule fois par un seul poste hôte. L'indicateur d'état permet d'assurer le passage d'un volume de stockage au suivant, au sens de prochain volume « disponible ». Chaque volume de stockage dédié est en outre associé à un indicateur de type d'accès, indiquant si l'accès est restreint à la lecture, restreint à l'écriture, ou encore si lecture et écriture sont permises. La table de partitions publique 2 est stockée dans une zone du support 1 assimilable à la « zone amorce » usuelle des supports de données. Autrement dit, une zone dans laquelle les caractéristiques définissant le support 1 et que l'on souhaite transmettre aux postes hôtes sont stockées.

Dans de tels modes de réalisation, les étapes b et c de verrouillage/déverrouillage et masquage/démasquage incluent une mise à jour spécifique de la table de partitions publique 2. Indépendamment d'une éventuelle mise à jour classique de la table de partitions publique 2 par le poste hôte 202 au cours du mode courant, la mise à jour spécifique est mise en œuvre sans être pilotée par le poste hôte et correspond à la mise en œuvre des étapes b et c. En fonction des modes de réalisation, la mise à jour spécifique est pilotée par le microcontrôleur ou la plateforme matérielle informatique embarquée sur le support 1, et non par le poste hôte 202. Au cours de la mise à jour spécifique, les référencements des partitions correspondant aux volumes de stockage dédiés 301, 302, 303 sont modifiés conformément à ce qui est décrit ci-avant à propos des étapes b et c. Autrement dit, le support 1 adapte la table de partition publique 2 de sorte que son contenu ne corresponde pas au partitionnement réel du support 1.

Le fonctionnement ci-dessus, basé sur des tables de partitions, implique que le support 1 ait été préalablement configuré, par exemple selon une phase de configuration préalable via un poste administrateur 100 tel que décrite ci-avant. Dans d'autres modes de réalisations, il n'est pas nécessaire que le support 1 ait été préalablement configuré via un poste administrateur 100, notamment lorsqu'une plateforme matérielle informatique embarquée est prévue sur le support 1. Dans un tel cas, la configuration préalable peut être mise en œuvre « à la volée », c'est-à-dire immédiatement avant l'étape a du procédé de gestion 22. Par exemple, préalablement à la transmission au poste hôte 202 des données de configuration spécifiques au mode courant (étape a), une série d'étapes préalables est mise en œuvre en l'absence de réception d'un signal d'identification du poste administrateur 100 sur le support 1 et à réception du premier signal d'initialisation de connexion issu d'un poste hôte 202.

La série d'étapes comprend par exemple :
a0) créer un fichier creux d'une taille préétablie ;
a1) convertir le fichier creux en un volume de stockage virtuel ;
a2) formater le volume de stockage virtuel selon un système de fichiers préétabli.

**On** entend par «fichier creux», un fichier dont la taille apparente (par exemple telle que déclarée dans la table de partition publique 2 peut être différente de la taille effective occupée sur le support 1. Dans l'exemple, le volume de stockage dédié 302 dont l'accès en lecture et en écriture est permis au poste hôte 202 selon le protocole USB, est le volume de stockage virtuel. Du point de vue du support 1, le volume de stockage virtuel est piloté par le support 1 comme le serait un volume de stockage physique. En pratique, le poste hôte 202 lit et/ou écrit sur le volume de stockage virtuel seulement indirectement, par l'intermédiaire de la plateforme matérielle informatique embarquée sur le support 1.

Dans de tels modes de réalisation et au cours d'un cycle ultérieur, lorsque le poste hôte suivant 203 écrit sur le nouveau volume de stockage virtuel formant volume de stockage dédié 303, la plateforme peut retranscrire, à la volée, les opérations d'écriture sur le volume de stockage virtuel (ici 303) dans le fichier creux associé dans son espace réel, interne, physique (inaccessible directement au poste hôte). Par comparaison avec les modes de réalisation précédents pour lesquels les espaces physiques sont pré-dimensionnés de manière fixe (par le partitionnement), ici, aucun espace de stockage physique disponible n'est rendu inutilisable à l'issue d'une connexion avec un poste hôte. L'occupation de l'espace de stockage du support 1 dans son ensemble est encore améliorée et les limites de saturation du support 1 sont repoussées. En outre, le nombre de partitions n'est pas fixé à l'avance : tant qu'il existe de l'espace vierge, un nouveau volume de stockage virtuel peut être défini. Le nombre de connexions du support sur des postes hôtes 201, 202, 203 avant reconfiguration est limité seulement par la quantité de données déjà stockées et le volume réel du support 1.

Le procédé de gestion 22 du support 1 peut présenter, en outre, des caractéristiques optionnelles. Par exemple, le procédé comprend en outre, à réception d'une commande de lecture et/ou d'écriture depuis le poste hôte 202, en particulier par le microcontrôleur du support 1, en mode courant :
d) vérifier 104 la validité de la commande par comparaison de l'adresse mémoire et de la taille des données à écrire (incluses dans la commande) avec les adresses et tailles du volume de stockage dédié 302, de sorte que ladite commande est permise et mise en œuvre uniquement en cas de validité, et rejetée sinon.

Une telle opération supplémentaire de filtrage des commandes reçues du poste hôte 202 permet de limiter les risques de compromission (lecture et/ou écriture) des données stockées sur des volumes de stockage normalement inaccessibles au poste hôte 202 considéré, que cela résulte d'erreurs ou de nuisance volontaire. Par exemple, avant chaque commande de lecture et/ou d'écriture depuis un contrôleur USB du poste hôte 202 ou vers un contrôleur mémoire du support 1, le microcontrôleur compare les adresses mémoires à des listes blanche ou noire d'adresses mémoire autorisées/interdites. Lesdites listes sont dynamiques au sens que seule la partition courante (ici 302) est référencée comme accessible.

Le procédé peut optionnellement comprendre, en outre :
e) établir un canal 105 en Accès Mémoire Direct (ou DMA pour « *Direct Memory Access* ») entre un contrôleur USB du poste hôte 202 et un contrôleur mémoire du support 1. Ainsi, les ressources du support 1 peuvent être économisées, en particulier lorsque le support 1 ne dispose pas d'une plateforme matérielle informatique embarquée mais seulement d'un microcontrôleur embarqué.

Afin de ne pas complexifier inutilement la présente description, seuls des systèmes à partition « simples » ont été présentés. Cela ne saurait être interprété comme une limitation : une personne du métier sait sans difficulté adapter les solutions proposées, lorsque cela est pertinent, en utilisant des mécanismes de « partition étendue », comme cela est connu dans le domaine des supports de stockage de données.

Une fois le procédé de gestion 22 terminé sur chacun des postes hôtes 201, 202, 203, un procédé de centralisation 23 des données peut être mis en œuvre. Le support 1 est connecté à un poste administrateur 100. Le procédé de centralisation 23 peut comprendre un processus de déclenchement du mode administration 24 tel que décrit précédemment. Le procédé de centralisation 23 comprend, ensuite, une étape 2000 durant laquelle le poste administrateur 100 accède à l'ensemble des données de contenu collectées sur le support 1. Pour cela, le poste administrateur 100 accède, par exemple, à une table de partition authentique maintenue à jour en zone d'administration 300. Dans des modes de réalisation, le support 1 peut en outre être configuré pour tenir à jour un fichier sous forme de journal d'événements dans lequel sont répertoriés des évènements relatifs aux connexions successives à des postes hôtes (nombre de postes auxquels le support 1 a été connecté, horodatage, etc.). Le poste administrateur 100, à l'issue de la tournée, peut ainsi disposer d'informations supplémentaires.

À l'issue du procédé de centralisation 23 des données, un nouveau cycle peut débuter, par exemple en mettant à nouveau en œuvre un procédé de configuration 21 du support 1.

En figure 5 est représenté un exemple de la manière dont les procédés de configuration 21, de gestion 22, de centralisation 23 et des processus de déclenchement du mode administrateur 24 peuvent être mis en œuvre les uns par rapport aux autres. Les autres références numériques reprennent celles des étapes composant chacun des procédés et processus. « N » représente le nombre de postes hôtes auquel le support 1 est connecté successivement.

### Application industrielle

Les procédés et supports décrits ci-avant ont été décrits dans le contexte industriel pour lequel ils ont effectivement été développés par la demanderesse, à savoir la tournée de postes informatiques déconnectés des réseaux pour y télécharger, dans un sens et/ou dans l'autre, des données. Une telle application contextuelle n'est pas limitative. Ce qui est décrit ici pourrait, par exemple, être mis en œuvre dans le contexte de recherche d'informations et de preuves sur plusieurs équipements informatiques *a priori* inconnus. Par exemple, dans le cas d'investigations judiciaires sur le terrain, on peut souhaiter collecter des données informatiques en garantissant leur intégrité et celle des équipements eux-mêmes. Il est aussi envisageable qu'un utilisateur nomade, tel qu'une personne donnant des conférences, utilise un tel support pour y stocker à la fois des données publiques (une présentation), des données privées (documents de travail) et des données privées récoltées sur divers postes dont l'intégrité est inconnue (informations confidentielles fournies par des tiers).

Par souci de clarté, l'ensemble des procédés mis en œuvre ont été décrits de manière combinée. Les procédés et leurs variantes peuvent être mis en œuvre indépendamment les uns des autres. Les procédés étant de nature essentiellement informatique, ils peuvent prendre la forme d'un ou plusieurs programmes (ou composants logiciels), de supports d'enregistrement non transitoires sur lesquels sont enregistrés de tels programmes. Des supports amovibles de stockage de données obtenus par la mise en œuvre de l'un au moins des procédés décrits font également partie de la protection recherchée. De même, dans les exemples précédents, un unique volume de stockage dédié est prévu pour chaque connexion à un poste hôte et un unique volume de stockage public 3 optionnel sont décrits. Dans des variantes, plusieurs volumes de chaque type peuvent être prévus.

L'invention ne se limite pas aux exemples de procédés, supports, programmes informatiques et supports d'enregistrement non transitoire sur lequel est enregistré un programme décrits ci-avant, seulement à titre d'exemple, mais elle englobe toutes les variantes que pourra envisager l'homme de l'art dans la limite définie par la portée des revendications.

### Liste des signes de référence

- 1 : support
- 2 : table de partitions publique
- 3 : volume de stockage public
- 11-15 : étapes du processus de déclenchement du mode administrateur
- 21 : procédé de configuration
- 22 : procédé de gestion
- 23 : procédé de centralisation
- 24 : processus de déclenchement du mode administrateur
- 100 : poste administrateur
- 101-105 : étapes du procédé de gestion
- 201 : poste hôte
- 202 : poste hôte
- 203 : poste hôte
- 300 : zone d'administration
- 301 : volume de stockage dédié
- 302 : volume de stockage dédié
- 303 : volume de stockage dédié
- 1001 à 1005 : étapes du procédé de configuration
- 2000 : étape du procédé de centralisation

## Revendications

1. Procédé informatique de gestion (22) d'un support (1) amovible de stockage de données mis en œuvre par un microcontrôleur embarqué ou une plateforme matérielle informatique embarquée sur le support (1), le support (1) étant agencé pour être connecté physiquement et alternativement à au moins un poste administrateur (100) et à une pluralité de postes hôtes (201, 202, 203), ledit procédé comprenant :
a) en l'absence de réception d'un signal d'identification du poste administrateur (100) sur le support (1), et à réception d'un premier signal d'initialisation de connexion issu d'un poste (202), assimiler ledit poste (202) à un poste hôte (202) et transmettre (101) au poste hôte (202) des données de configuration spécifiques à un mode courant dans lequel le poste hôte (202) accède, en lecture et en écriture, à un premier volume de stockage dédié (302) du support (1) et n'accède pas, ni en lecture ni en écriture, à des volumes de stockage (300, 301, 303) préalablement verrouillés et/ou masqués du support (1) ; ledit procédé **caractérisé en ce qu'**il comprend:
b) à réception d'un signal de déconnexion imminente du support (1) et/ou à réception d'un second signal d'initialisation de connexion d'un poste hôte (201 ; 202 ; 203) en l'absence de réception d'un signal d'identification du poste administrateur (100), verrouiller et/ou masquer (102) le premier volume de stockage dédié (302) de sorte que ledit premier volume devienne inaccessible à tout poste hôte (201 ; 202 ; 203) auquel le support (1) serait désormais connecté ;
c) déverrouiller et/ou rendre visible (103) un deuxième volume de stockage dédié (303), différent du premier volume de stockage dédié (302), de sorte que ledit deuxième volume de stockage dédié (303) devienne accessible à un poste hôte (201 ; 202 ; 203) auquel le support (1) serait désormais connecté.

2. Procédé selon la revendication précédente, dans lequel, dans le mode courant, le poste hôte (201) auquel est connecté le support (1) accède en outre, en lecture et pas en écriture, à un volume de stockage public (3) du support (1).

3. Procédé selon l'une des revendications précédentes, dans lequel le support (1) comprend au moins un connecteur USB par l'intermédiaire duquel le support (1) est connecté aux postes (100, 201, 202, 203), et dans lequel les données de configuration sont transmises selon les protocoles de communication USB et de mémoire de masse, l'accès en lecture et en écriture à un volume de stockage dédié (302) en mode courant incluant l'accès par le poste hôte (202) à une table de partitions publique (2) stockée sur le support (1), ladite table de partition publique (2) étant construite de sorte que les volumes de stockage préalablement verrouillés y sont référencés comme inaccessibles et/ou que les volumes de stockage (300, 301, 303) préalablement masqués y sont non-référencés.

4. Procédé selon la revendication 3, comprenant en outre, à réception d'une commande de lecture et/ou d'écriture depuis le poste hôte (202) par le support (1), en mode courant :
d) vérifier (104) la validité de la commande par comparaison de l'adresse mémoire et de la taille des données à écrire incluses dans la commande avec les adresses et tailles du volume de stockage dédié (302), de sorte que ladite commande est permise et mise en œuvre uniquement en cas de validité, et rejetée sinon.

5. Procédé selon l'une des revendications précédentes, comprenant en outre :
e) établir un canal (105) en Accès Mémoire Direct entre un contrôleur USB du poste hôte (202) et un contrôleur mémoire du support (1).

6. Procédé selon l'une des revendications précédentes, dans lequel,
en l'absence de réception d'un signal d'identification du poste administrateur (100) sur le support (1), à réception d'un premier signal d'initialisation de connexion issu d'un poste (202) et préalablement à la transmission (101) au poste hôte (201) des données de configuration spécifiques au mode courant,
la série d'étapes suivantes est mise en œuvre :
a0) créer un fichier creux d'une taille préétablie ;
a1) convertir le fichier creux en un volume de stockage virtuel ;
a2) formater le volume de stockage virtuel selon un système de fichiers préétabli, et dans lequel le volume de stockage dédié (302) dont l'accès en lecture et en écriture est permis au poste hôte (202) via les descripteurs selon le protocole USB, est ledit volume de stockage virtuel,
de sorte que le poste hôte (201) lit et/ou écrit sur le volume de stockage virtuel seulement indirectement par l'intermédiaire de la plateforme matérielle informatique embarquée sur le support (1) alors même que le volume de stockage virtuel est reconnu par le poste hôte (202) comme un volume de stockage physique selon les protocoles USB.

7. Procédé selon l'une des revendications précédentes, comprenant en outre :
a') à réception d'un signal d'identification du poste administrateur (100) sur le support (1), transmettre audit poste administrateur (100) des données de configuration spécifiques à un mode administration dans lequel le poste administrateur (100) accède, en lecture et en écriture, à l'ensemble des données de contenu et de configuration stockées sur le support (1).

8. Procédé selon la revendication 7, dans lequel la transmission de données de configuration spécifiques au mode administration inclut au préalable la mise en œuvre d'une authentification mutuelle entre le support (1) et le poste (100) auquel il est connecté par défi-réponse cryptographique.

9. Procédé selon la revendication 7, dans lequel la transmission de données de configuration spécifiques au mode administration inclut un processus de déclenchement du mode administration, ledit processus incluant :
- détecter l'inscription par un poste (100) sur le support (1) d'un fichier nommé de manière prédéfinie et contenant un horodatage ;
- vérifier que ledit fichier respecte des critères de sécurité préétablis ; et
- activer le mode administration en donnant accès au poste administrateur (100) à l'ensemble des données de contenu et de configuration stockées sur le support (1) si et seulement si le résultat de la vérification est positif.

10. Procédé de centralisation (23) de données sur un poste administrateur (100) depuis un support (1) amovible de stockage de données sur lequel a préalablement été mis en œuvre un procédé de gestion (22) selon l'une des revendications 1 à 9, ledit procédé de centralisation (23) comprenant un processus de déclenchement du mode administration (24), ledit processus incluant :
1) transmettre (11), depuis le poste administrateur (100) au support (1), un signal d'identification du poste administrateur (100).

11. Procédé selon la revendication 10, dans lequel le processus de déclenchement du mode administration (24) inclut en outre la mise en œuvre d'une authentification mutuelle entre le support (1) et le poste (100) auquel il est connecté par défi-réponse cryptographique.

12. Procédé selon la revendication 10, dans lequel le signal d'identification du poste administrateur (100) prend la forme d'un fichier nommé de manière prédéfinie contenant un horodatage.

13. Support (1) amovible de données comprenant un microcontrôleur embarqué ou une plateforme matérielle informatique embarquée agencés pour mettre en œuvre l'un au moins des procédés selon les revendications précédentes.

14. Programme informatique comportant des instructions pour la mise en œuvre de l'un des procédés selon l'une des revendications 1 à 12 lorsque ce programme est exécuté par un processeur, un microcontrôleur embarqué ou une plateforme matérielle informatique embarquée.

15. Support d'enregistrement non transitoire lisible par un ordinateur sur lequel est enregistré un programme pour la mise en œuvre du procédé selon l'une des revendications 1 à 12 lorsque ce programme est exécuté par un processeur, un microcontrôleur embarqué ou une plateforme matérielle informatique embarquée.

## Patentansprüche

1. Computergestütztes Verwaltungsverfahren (22) eines entfernbaren Trägers (1) zum Speichern von Daten, das von einem integrierten Mikrocontroller oder einer integrierten computergestützten Hardwareplattform auf dem Träger (1) durchgeführt wird, wobei der Träger (1) ausgebildet ist, um physisch und alternativ mit mindestens einer Administratorstation (100) und einer Vielzahl von Hoststationen (201, 202, 203) verbunden zu sein, wobei das Verfahren Folgendes aufweist:
a) in Abwesenheit des Empfangs eines Identifikationssignals der Administratorstation (100) auf dem Träger (1) und beim Empfang eines ersten Verbindungsinitialisierungssignals von einer Station (202), Gleichstellen der Station (202) mit einer Host-Station (202) und Übertragen (101) von Konfigurationsdaten an die Host-Station (202), die spezifisch für einen aktuellen Modus sind, in dem die Host-Station (202) beim Lesen und Schreiben auf einem ersten dedizierten Speichervolumen (302) des Trägers (1) zugreift, und weder beim Lesen noch beim Schreiben auf Speichervolumen (300, 301, 303) zugreift, die vorher gesperrt und/oder gegenüber dem Träger (1) maskiert wurden; wobei das Verfahren **dadurch gekennzeichnet ist, dass** es Folgendes aufweist:
b) beim Empfang eines Signals zu einer bevorstehenden Trennung von dem Träger (1) und/oder beim Empfang eines zweiten Verbindungsinitialisierungssignals von einer Host-Station (201, 202, 203) in Abwesenheit des Empfangs eines Identifikationssignals der Administratorstation (100), Sperren und/oder Maskieren (102) des ersten dedizierten Speichervolumens (302) in der Art, dass das erste Volumen für jede Host-Station (201, 202, 203) unzugänglich wird, mit der der Träger (1) von nun an verbunden wäre;
c) Entsperren und/oder Sichtbarmachen (103) eines zweiten dedizierten Speichervolumens (303), das sich vom ersten dedizierten Speichervolumen (302) unterscheidet, in der Art, dass das zweite dedizierte Speichervolumen (303) für eine Host-Station (201, 202, 203) zugänglich wird, mit der der Träger (1) von nun an verbunden wäre.

2. Verfahren nach dem vorhergehenden Anspruch, wobei im aktuellen Modus die Host-Station (201), mit der der Träger (1) verbunden ist, außerdem zum Lesen und nicht zum Schreiben auf ein öffentliches Speichervolumen (3) des Speichers (1) zugreift.

3. Verfahren nach einem der vorhergehenden Ansprüche, wobei der Träger (1) mindestens einen USB-Anschluss aufweist, über den der Träger (1) mit den Stationen (100, 201, 202, 203) verbunden ist und in den die Konfigurationsdaten gemäß den USB-Kommunikations- und Massenspeicherprotokollen übertragen werden, wobei der Lese- und Schreibzugriff auf ein dediziertes Speichervolumen (302) im aktuellen Modus den Zugang durch die Host-Station (202) auf eine öffentliche Partitionstabelle (2) beinhaltet, die auf dem Träger (1) gespeichert ist, wobei die öffentliche Partitionstabelle (2) so aufgebaut ist, dass die zuvor gesperrten Speichervolumen darin als unzugänglich referenziert werden und/oder dass die Speichervolumen (300, 301, 303), die zuvor maskiert wurden, dort nicht referenziert werden.

4. Verfahren nach Anspruch 3, das darüber hinaus beim Empfang eines Lese- und/oder Schreibbefehls von der Host-Station (202) durch den Träger (1) im aktuellen Modus Folgendes aufweist:
d) Überprüfen (104) der Gültigkeit des Befehls durch Vergleichen der Speicheradresse und der Größe der im Befehl enthaltenen zu schreibenden Daten mit den Adressen und Größen des dedizierten Speichervolumens (302) in der Art, dass der Befehl nur bei Gültigkeit zulässig ist und durchgeführt wird und ansonsten abgelehnt wird.

5. Verfahren nach einem der vorhergehenden Ansprüche, das darüber hinaus Folgendes aufweist: e) Einrichten eines Kanals (105) mit direktem Speicherzugriff zwischen einem USB-Controller der Host-Station (202) und einem Speicher-Controller des Trägers (1).

6. Verfahren nach einem der vorhergehenden Ansprüche, wobei bei Abwesenheit des Empfangs eines Identifikationssignals der Administratorstation (100) auf dem Träger (1) beim Empfang eines ersten Verbindungsinitialisierungssignals von einer Station (202) und vor der Übertragung (101) von für den aktuellen Modus spezifischen Konfigurationsdaten an die Host-Station (201) die folgende Reihe von Schritten durchgeführt wird:
a0) Erstellen einer Leerdatei mit vorab festgelegter Größe;
a1) Konvertieren der Leerdatei in ein virtuelles Speichervolumen;
a2) Formatieren des virtuellen Speichervolumens gemäß einem vorab festgelegten Dateisystem und in dem das dedizierte Speichervolumen (302), dessen Lese- und Schreibzugriff für die Host-Station (202) über die Deskriptoren gemäß dem USB-Protokoll erlaubt ist, das virtuelle Speichervolumen ist,
in der Art, dass die Host-Station (201) nur indirekt über die integrierte computergestützte Hardwareplattform auf dem Träger (1) auf dem virtuellen Speichervolumen liest und/oder schreibt, obwohl das virtuelle Speichervolumen von der Host-Station (202) als ein physisches Speichervolumen gemäß den USB-Protokollen erkannt wird.

7. Verfahren nach einem der vorhergehenden Ansprüche, das darüber hinaus Folgendes aufweist:
a') beim Empfang eines Identifikationssignals der Administratorstation (100) auf dem Träger (1), Übertragen von Konfigurationsdaten an die Administratorstation (100), die spezifisch für einen Administrationsmodus sind, bei dem die Administratorstation (100) auf sämtliche auf dem Träger (1) gespeicherten Inhalts- und Konfigurationsdaten zum Lesen und Schreiben zugreift.

8. Verfahren nach Anspruch 7, wobei das Übertragen der Konfigurationsdaten, die spezifisch für den Administrationsmodus sind, zuvor das Durchführen einer gegenseitigen Authentifizierung zwischen dem Träger (1) und der Station (100) beinhaltet, mit der er über verschlüsselte Herausforderungs-Antwort verbunden ist.

9. Verfahren nach Anspruch 7, wobei das Übertragen der Konfigurationsdaten, die spezifisch für den Administrationsmodus sind, ein Verfahren zum Auslösen des Administrationsmodus beinhaltet, wobei das Verfahren Folgendes beinhaltet:
- Erkennen des Eintragens einer vorab benannten Datei mit einem Zeitstempel durch eine Station (100) auf dem Träger (1);
- Überprüfen, ob die Datei die vorab festgelegten Sicherheitskriterien erfüllt; und
- Aktivieren des Administrationsmodus, indem der Administratorstation (100) Zugriff auf alle auf dem Träger (1) gespeicherten Inhalts- und Konfigurationsdaten gewährt wird, wenn und nur wenn das Ergebnis der Überprüfung positiv ist.

10. Verfahren zum Zentralisieren (23) von Daten auf einer Administratorstation (100) die von einem entfernbaren Träger (1) zum Speichern von Daten stammen, auf dem zuvor ein Verwaltungsverfahren (22) gemäß einem der Ansprüche 1 bis 9 durchgeführt wurde, wobei das Zentralisierungsverfahren (23) ein Verfahren zum Auslösen des Administrationsmodus (24) aufweist, wobei das Verfahren Folgendes beinhaltet:
1) Übertragen (11) eines Identifikationssignals der Administratorstation (100) von der Administratorstation (100) an den Träger (1).

11. Verfahren nach Anspruch 10, wobei das Verfahren zum Auslösen des Administrationsmodus (24) darüber hinaus das Durchführen einer gegenseitigen Authentifizierung zwischen dem Träger (1) und der Station (100) beinhaltet, mit der er über verschlüsselte Herausforderungs-Antwort verbunden ist.

12. Verfahren nach Anspruch 10, wobei das Identifikationssignal der Administratorstation (100) die Form einer vorab benannten Datei mit einem Zeitstempel annimmt.

13. Entfernbarer Datenträger (1), der einen integrierten Mikrocontroller oder eine integrierte computergestützte Hardwareplattform aufweist, die zur Durchführung mindestens eines der Verfahren gemäß den vorhergehenden Ansprüchen ausgelegt sind.

14. Computerprogramm, das Anweisungen zur Durchführung eines der Verfahren gemäß einem der Ansprüche 1 bis 12 aufweist, wenn dieses Programm von einem Prozessor, einem integrierten Mikrocontroller oder einer integrierten computergestützten Hardwareplattform ausgeführt wird.

15. Nicht flüchtiges Speichermedium, das von einem Computer gelesen werden kann, auf dem ein Programm zur Durchführung des Verfahrens gemäß einem der Ansprüche 1 bis 12 gespeichert ist, wenn dieses Programm von einem Prozessor, einem integrierten Mikrocontroller oder einer integrierten computergestützten Hardwareplattform ausgeführt wird.

## Claims

1. Computer method (22) for managing a removable data-storage medium (1) implemented by an onboard microcontroller or a computer hardware platform onboard the medium (1), the medium (1) being arranged to be physically and alternatingly connected to at least one administrator station (100) and to a plurality of guest stations (201, 202, 203), said method comprising:
a) in the absence of reception of a signal of identification of the administrator station (100) on the medium (1), and upon reception of a first connection-initialisation signal coming from a station (202), equating said station (202) with a guest station (202) and transmitting (101) to the guest station (202) configuration data specific to a current mode in which the guest station (202) accesses, in read and write mode, a first dedicated storage volume (302) of the medium (1) and does not access, in read or write mode, previously locked and/or masked storage volumes (300, 301, 303) of the medium (1); said method **characterised in that** it comprises:
b) upon reception of a signal of imminent disconnection of the medium (1) and/or upon reception of a second connection-initialisation signal from a guest station (201; 202; 203) in the absence of reception of a signal of identification of the administrator station (100), locking and/or masking (102) the first dedicated storage volume (302) so that said first volume becomes inaccessible to any guest station (201; 202; 203) to which the medium (1) is subsequently connected;
c) unlocking and/or making visible (103) a second dedicated storage volume (303), different from the first dedicated storage volume (302), so that said second dedicated storage volume (303) becomes accessible to a guest station (201; 202; 203) to which the medium (1) is subsequently connected.

2. Method according to the previous claim, wherein, in the current mode, the guest station (201) to which the medium (1) is connected further accesses, in read and not in write mode, a public storage volume (3) of the medium (1).

3. Method according to any one of the previous claims, wherein the medium (1) comprises at least one USB connector by means of which the medium (1) is connected to the stations (100, 201, 202, 203), and wherein the configuration data is transmitted according to the USB communication and mass storage protocols, the read and write access to a dedicated storage volume (302) in the current mode including access by the guest station (202) to a public partition table (2) stored on the medium (1), said public partition table (2) being built so that the previously locked storage volumes are referenced therein as inaccessible and/or the previously masked storage volumes (300, 301, 303) are not referenced therein.

4. Method according to claim 3, further comprising, upon reception of a read and/or write command from the guest station (202) by the medium (1), in current mode:
d) verifying (104) the validity of the command by comparison of the memory address and of the size of the data to be written included in the command to the addresses and sizes of the dedicated storage volume (302), so that said command is allowed and implemented only in the case of validity, and otherwise rejected.

5. Method according to any one of the previous claims, further comprising:
e) establishing a direct memory access channel (105) between a USB controller of the guest station (202) and a memory controller of the medium (1).

6. Method according to any one of the previous claims, wherein,
in the absence of reception of a signal of identification of the administrator station (100) on the medium (1), upon reception of a first connection-initialisation signal coming from a station (202) and before the transmission (101) to the guest station (201) of the configuration data specific to the current mode,
the series of following steps is implemented:
a0) creating a sparse file having a preestablished size;
a1) converting the sparse file into a virtual storage volume;
a2) formatting the virtual storage volume according to a preestablished file system, and wherein the dedicated storage volume (302), read and write access to which by the guest station (202) is allowed via the descriptors according to the USB protocol, is said virtual storage volume,
so that the guest station (201) reads and/or writes to the virtual storage volume only indirectly via the computer hardware platform onboard the medium (1) while the virtual storage volume is recognised by the guest station (202) as a physical storage volume according to the USB protocols.

7. Method according to any one of the previous claims, further comprising:
a') upon reception of a signal of identification of the administrator station (100) on the medium (1), transmitting to said administrator station (100) configuration data specific to an administration mode in which the administrator station (100) accesses, in read and write mode, all of the content and configuration data stored on the medium (1).

8. Method according to claim 7, wherein the transmission of configuration data specific to the administration mode previously includes the implementation of a mutual authentication between the medium (1) and the station (100) to which it is connected by cryptographic challenge-response.

9. Method according to claim 7, wherein the transmission of configuration data specific to the administration mode includes a process of triggering the administration mode, said process including:
- detecting the writing by a station (100) onto the medium (1) of a file named in a predefined manner and containing a timestamp;
- verifying that said file respects preestablished security criteria; and
- activating the administration mode by giving access to the administrator station (100) to all of the content and configuration data stored on the medium (1) if and only if the result of the verification is positive.

10. Method (23) for centralising data on an administrator station (100) from a removable data-storage medium (1) on which a management method (22) according to one of claims 1 to 9 has been previously implemented, said centralisation method (23) comprising a process of triggering the administration mode (24), said process including:
1) transmitting (11), from the administrator station (100) to the medium (1), a signal of identification of the administrator station (100).

11. Method according to claim 10, wherein the process of triggering the administration mode (24) further includes the implementation of a mutual authentication between the medium (1) and the station (100) to which it is connected by cryptographic challenge-response.

12. Method according to claim 10, wherein the signal of identification of the administrator station (100) takes the form of a file named in a predefined manner containing a timestamp.

13. Removable data medium (1) comprising an onboard microcontroller or an onboard computer hardware platform arranged to implement at least one of the methods according to the previous claims.

14. Computer program including instructions for the implementation of one of the methods according to one of claims 1 to 12 when this program is executed by a processor, an onboard microcontroller or an onboard computer hardware platform.

15. Non-transient recording medium readable by a computer on which a program is recorded for the implementation of the method according to one of claims 1 to 12 when this program is executed by a processor, an onboard microcontroller or an onboard computer hardware platform.
